(19) Europäisches Patentamt
European Patent Office
Office européen des brevets

(11) **EP 4 116 866 B1**

(12) **EUROPÄISCHE PATENTSCHRIFT**

(45) Veröffentlichungstag und Bekanntmachung des Hinweises auf die Patenterteilung:
**19.06.2024 Patentblatt 2024/25**

(21) Anmeldenummer: **21183768.7**

(22) Anmeldetag: **05.07.2021**

(51) Internationale Patentklassifikation (IPC):
**G06K 7/00** *(2006.01)* **G06K 7/10** *(2006.01)*

(52) Gemeinsame Patentklassifikation (CPC):
**G06K 7/0008; G06K 7/10148;** G06K 2007/10495

(54) **SICHERHEITSSYSTEM UND VERFAHREN ZUM BETRIEB EINES SICHERHEITSSYSTEMS**

SAFETY SYSTEM AND METHOD FOR OPERATING SAME

SYSTÈME DE SÉCURITÉ ET PROCÉDÉ DE FONCTIONNEMENT D'UN SYSTÈME DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.01.2023 Patentblatt 2023/02**

(73) Patentinhaber: EUCHNER GmbH + Co. KG
**70771 Leinfelden-Echterdingen (DE)**

(72) Erfinder:
• **Denk, Dimitri**
**71034 Böblingen (DE)**
• **Scheiner, Frank**
**88131 Lindau (DE)**

(74) Vertreter: **Ruckh, Rainer Gerhard**
**Patentanwaltskanzlei Ruckh**
**Jurastraße 1**
**73087 Bad Boll (DE)**

(56) Entgegenhaltungen:
**EP-A2- 0 944 014 WO-A2-2009/090426**
**US-A1- 2019 036 759**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Sicherheitssystem und ein Verfahren zum Betrieb eines Sicherheitssystems.

Ein derartiges Sicherheitssystem umfasst beispielsweise einen Sicherheitsschalter und einen relativ zum Sicherheitsschalter beweglich angeordneten Betätiger. Das so ausgebildete Sicherheitssystem wird allgemein im Bereich der Sicherheitstechnik eingesetzt. Ein Beispiel für einen derartigen Einsatz im Bereich der Sicherheitstechnik ist eine Zugangsabsicherung zu einem Gefahrenbereich, wobei der Zugang mit einer Schutztür verschlossen werden kann. In diesem Fall ist der Betätiger typischerweise an der Schutztür angeordnet, während der Sicherheitsschalter an einer den Zugang begrenzenden Rahmenkonstruktion angeordnet ist.

Bekannte Sicherheitsschalter weisen ein RFID-System mit einem im Betätiger integrierten Transponder und einer im Sicherheitsschalter integrierten RFID-Leseeinheit auf. Mit diesem RFID-System kann die Schließstellung der Schutztür kontrolliert werden. Nur wenn sich die Tür in der Schließstellung befindet, ist der Transponder im Betätiger der Leseeinheit im Sicherheitsschalter räumlich so zugeordnet, dass Transpondersignale des Transponders von der Leseeinheit empfangen werden.

Darüber hinaus kann mit dem Sicherheitssystem die Schutztür in ihrer Schließstellung gesichert werden. Hierzu weist der Sicherheitsschalter typischerweise ein Zuhalteelement in Form eines Zuhaltebolzens auf, der dann, wenn sich die Schutztür in der Schließstellung befindet, in eine Aufnahme, insbesondere Ausnehmung im Betätiger, eingefahren werden kann, wodurch eine Zuhaltung der Schutztür bewirkt ist. Das Sicherheitssystem bildet dann ein Zuhaltesystem.

Das Sicherheitssystem kann auch als Zugangskontrollsystem ausgebildet sein, mit dem ein kontrollierter Zugang zu einer Anlage gewährt wird. Auch hier können RFID-Leseeinheiten mit zugeordneten Transpondern vorgesehen sein, wobei diese dann Schlüsselsysteme ausbilden.

Generell wird bei derartigen Sicherheitssystemen ein Signal aus einem Transponder von der RFID-Leseeinheit ausgelesen und dann über einen Analog-Digital-Wandler einer Rechnereinheit zugeführt, wo dieses Signal ausgewertet wird.

Das Signal wird im Analog-Digital-Wandler mit mehreren Abtastpunkten mehrfach abgetastet und so digitalisiert. Die Datenrückgewinnung aus dem digitalisierten Signal ist abhängig von der Charakteristik des Analog-Digital-Wandlers, insbesondere von den Abtastzeitpunkten, in welchen das Signal des Transponders abgetastet wird. Durch Bauteiltoleranzen kann das abgetastete Signal eine gerätespezifische Phasenverschiebung $\varphi$ gegenüber dem analogen Signal des Transponders aufweisen. Dies kann zu Signalverfälschungen führen, so dass das Signal des Transponders nur noch fehlerhaft oder unvollständig detektiert werden kann.

Eine weitere Schwierigkeit ergibt sich, wenn zur Erfüllung sicherheitstechnischer Anforderungen das Signal des Transponders mehrkanalig in die Rechnereinheit eingelesen wird, wobei dann jeder Kanal einen Analog-Digital-Wandler aufweist, in welchem das Signal des Transponders digitalisiert wird.

Hier besteht eine wesentliche Anforderung darin, die digitalisierten Signale zeitsynchron der Rechnereinheit zuzuführen. Hierzu müssen bei bekannten Sicherheitssystemen aufwändige externe Schaltungsanordnungen zur Synchronisierung des Analog-Digital-Wandlers vorgesehen werden.

Die WO 2009 / 090 426 A2 betrifft ein RFID-Lesegerät, das zur Zugangskontrolle von Türen für Haustiere, insbesondere Katzen, genutzt wird. Dabei trägt das Tier einen Transponder, in dem Codes gespeichert sind, die mit dem RFID-Lesegerät ausgelesen werden können. Beim Auslesen können die Codes einem Lesefeld mit unterschiedlichen Modulationsschemas aufmoduliert sein. Im RFID-Lesegerät werden bei dem Lesen von Codes Fehlerprüfungen, wie z.B. CRC-, Paritäts-Checks oder Signal/Rauschverhältnis, durchgeführt. Abhängig hiervon wird ein Zuverlässigkeits-Schwellwert als Maß für die Zuverlässigkeit des Lesens eines Codes bestimmt.

Die US 2019 / 003 675 A1 beschreibt Methoden zur Wiedergewinnung des Timings von Signalen. Insbesondere kann ein Signal in vier Prozessblöcken unterschiedlich verzögert werden Die Verzögerungen können von einem Prozessblock zum nächsten immer gleich variieren. Aus den verzögerten Signalen wird jeweils die vierte Potenz gebildet, um einen dominanten Peak im Frequenzspektrum zu erhalten. Die so bearbeiteten verzögerten Signale werden einem Phasenschätzblock zugeführt. Daraus wird das optimale Sample-Timing für das Signal bestimmt.

Der Erfindung liegt die Aufgabe zugrunde ein Sicherheitssystem bereitzustellen, bei welchem Signal eines Transponders sicher und fehlerfrei erfasst werden können.

Zur Lösung dieser Aufgabe sind die Merkmale der unabhängigen Ansprüche beschrieben. Vorteilhafte Ausführungsformen und zweckmäßige Weiterbildungen der Erfindung sind in den abhängigen Ansprüchen beschrieben.

Die Erfindung betrifft ein Sicherheitssystem mit wenigstens einem Transponder und wenigstens einer RFID-Leseeinheit. Mit der RFID-Leseeinheit ist ein sinusförmiges Signal aus dem Transponder auslesbar und über einen Analog-Digital-Wandler einer Rechnereinheit zuführbar. Weiterhin sind Steuermittel vorgesehen, in welchen die Periode des sinusförmigen Signals vorgegeben wird. Zudem werden durch die Steuermittel für eine Abtastung des sinusförmigen Signals während einer Abtastperiode vier Abtastzeitpunkte vorgegeben, die jeweils um ein Viertel der Periode des sinusförmigen Signals zueinander äquidistant versetzt sind. Mit dem Analog-Digital-Wandler wird für jeden Abtastzeitpunkt ein Abtastwert erhalten. In den Steuermitteln wird aus den Abtastwerten für die vier Abtastzeitpunkte die Phasenverschiebung $\varphi$ des durch die Abtastungen erhaltenen Signalverlaufs zum sinusförmigen Signal ermittelt.

Das erfindungsgemäße System kann in unterschiedlichen Bereichen der Sicherheitstechnik, das heißt im Bereich der Maschinensicherheit zur Absicherung von Maschinen und Anlagen eingesetzt werden.

Das Sicherheitssystem kann zum Beispiel einen Sicherheitsschalter oder ein Zuhaltesystem aufweisen, welchen zweckmäßig wenigstens ein Betätiger zugeordnet ist. Im Sicherheitsschalter oder Zuhaltesystem ist eine RFID-Leseeinheit angeordnet, während in dem oder in den Betätigern jeweils ein Transponder vorgesehen ist. Mit derartigen Sicherheitssystemen kann beispielsweise der Zugang zu einem Gefahrenbereich einer Anlage gesichert werden, wobei der Zugang über eine trennende Schutzeinrichtung wie zum Beispiel einer Schutztür erfolgen kann. Ein sicherer Zustand ist insbesondere dann gegeben, wenn sich die trennende Schutzeinrichtung in einer Schließstellung befindet. Diese Schließstellung wird dadurch detektiert, dass dann der Transponder in einem von der trennenden Schutzeinrichtung zugeordneten Betätiger innerhalb des Lesebereichs der RFID-Leseeinheit liegt, so dass dann Signale des Transponders von der RFID-Leseeinheit ausgelesen werden können. Werden die Signale des Transponders als gültig erkannt, generiert der Sicherheitsschalter oder das Zuhaltesystem Schaltsignale, mit denen der Betrieb der Anlage freigegeben wird.

Weiterhin kann das Sicherheitssystem ein Zugangssystem insbesondere ein Zugangskontrollsystem bilden, mit dem beispielsweise Betriebsarten einer Anlage eingestellt oder der Zugang zu einer Anlage kontrolliert werden kann. In beiden Ausführungsvarianten kann das Sicherheitssystem eine RFID-Leseeinheit mit zugeordneten Transpondern aufweisen, die dann ein Schlüsselsystem ausbilden.

Bei sämtlichen Ausführungsformen des Sicherheitssystems besteht eine wesentliche Anforderung darin, dass Signale eines Transponders von einer RFID-Leseeinheit sicher und zuverlässig gelesen werden, da anhand der Signale der Transponder sicherheitsrelevante Funktionen ausgeführt beziehungsweise freigegeben werden.

Diese Anforderungen werden bei diesem erfindungsgemäßen Sicherheitssystem erfüllt. Dabei wird die Erkenntnis ausgenutzt, dass die Signale des Transponders periodische, sinusförmige Signale sind, deren Periode bekannt ist und als Parameter in den Steuermitteln hinterlegt sind.

Erfindungsgemäß werden zur Abtastung der sinusförmigen Signale des Transponders im Analog-Digital-Wandler über die Steuermittel exakt vier Abtastzeitpunkte vorgegeben, die jeweils um eine Viertelperiode des sinusförmigen Signals zueinander versetzt sind. Diese äquidistanten Abtastzeitpunkte sind damit an die Periode der sinusförmigen Signale angepasst. Für jeden Abtastzeitpunkt wird ein Abtastwert erhalten, so dass per Periode eine Folge von vier Abtastwerten erhalten wird. Aus den vier Abtastwerten wird erfindungsgemäß die Phasenverschiebung $\varphi$ des durch die Abtastungen erhaltenen Signals relativ zum sinusförmigen Signal des Transponders berechnet.

Vorteilhaft wird aus der zeitlichen Folge der Abtastwerte die Phasenverschiebung $\varphi$ gemäß der Berechnung $\varphi = \arctan((S3 - S1)/(S0 - S2))$ berechnet.

Zudem können aus der zeitlichen Folge der Abtastwerte als weitere Signalcharakteristiken eine Signalstärke $A = S1 - S3$, eine Signalasymmetrie $C = S0 - S2$ und ein Signaloffset $B = (S0 + S1 + S2 + S3)/4$ bestimmt werden.

Anhand der bestimmten Phasenverschiebung $\varphi$ sind Fehlerkorrekturen möglich, welche ein sicheres und fehlerfreies Erkennen des sinusförmigen Signals des Transponders ermöglichen.

Vorteilhaft wird anhand der ermittelten Phasenverschiebung $\varphi$ eine automatische Phasenkorrektur von bei Abtastungen erhaltenen Signalen durchgeführt.

Die automatische Phasenkorrektur erfolgt vorzugsweise in einem iterativen Prozess derart, dass die bei einer Abtastperiode ermittelte Phasenverschiebung $\varphi$ als Ausgangspunkt für die Wahl der Abtastzeitpunkte für die nächste Abtastperiode verwendet wird.

Somit wird mit der bei einer Abtastperiode ermittelten Phasenverschiebung $\varphi$ die Phase der Abtastungen an die Phase des sinusförmigen Signals angepasst.

Da jeweils die zuletzt ermittelte Phasenverschiebung $\varphi$ als Ausgangspunkt für die Auswahl der nächsten Folge von Abtastwerten herangezogen wird, konvergiert das Abtastverfahren schnell gegen den Sollwert $\varphi = 0$ (oder alternativ $C = 0$), das heißt bereits nach relativ wenigen Abtastzyklen erfolgt eine phasensynchrone Abtastung des sinusförmigen Signals mit einer Phasenverschiebung $\varphi = 0$, was insbesondere bedeutet, dass ein Abtastwert der Folge S0 - S3 exakt das Maximum des sinusförmigen Signals detektiert.

Durch diese phasensynchrone Abtastung liegt die gesamte Information des sinusförmigen Signals im abgetasteten Signal am Ausgang des Analog-Digital-Wandlers vor und kann in der Rechnereinheit ausgewertet werden.

Mit der erfindungsgemäßen Abtastung der sinusförmigen Signale des Transponders können bauteilbedingte Toleranzen oder Fehler aufgrund von Alterungen von Bauteilen ebenso wie externe Umgebungseinflüsse wie Temperatur oder Feuchtigkeit kompensiert werden, wodurch eine sichere und fehlerfreie Abtastung unter realen störungsbehafteten Bedingungen ermöglicht wird.

Weiterhin können Diagnosemaßnahmen realisiert werden, die die funktionale Sicherheit des Sicherheitssystems erhöhen.

Schließlich ist vorteilhaft, dass für die erfindungsgemäße Abtastung des sinusförmigen Signals im Analog-Digital-Wandler nur wenige Abtastpunkte erforderlich sind. Zudem ist nur ein geringer Rechenaufwand für die Signalverarbeitung erforderlich, wobei vorteilhaft die Steuermittel Bestandteil der Rechnereinheit sind. Dies ermöglicht einen Einsatz in Rechnereinheiten nicht nur in Form von Microcontrollern sondern auch in ASICs.

Ein besonders fehlersicherer Aufbau des Sicherheitssystems ist dadurch gegeben, dass die sinusförmigen Signale des Transponders der Rechnereinheit mehrkanalig zugeführt sind, wobei jeder Kanal einen Analog-Digital-Wandler aufweist, wobei für jeden Analog-Digital-Wandler in identischer Weise Abtastungen durchgeführt werden und wobei für jeden Analog-Digital-Wandler die Phasenverschiebung $\varphi$ des durch die Abtastungen erhaltenen Signalverlaufs zum sinusförmigen Signal ermittelt wird.

Damit wird für jeden Kanal, das heißt jeden Analog-Digital-Wandler die erfindungsgemäße Abtastung derart durchgeführt, dass durch die Steuermittel für eine Abtastung des sinusförmigen Signals während einer Abtastperiode vier Abtastzeitpunkte vorgesehen werden, die jeweils um ein Viertel der Periode des sinusförmigen Signals zueinander äquidistant versetzt sind, wobei die Periode des sinusförmigen Signals wieder in den Steuermitteln abgespeichert ist. Mit jedem Analog-Digital-Wandler wird für jeden Abtastzeitpunkt ein Abtastwert S0 - S3 erhalten. Entsprechend wird in den Steuermitteln aus den Abtastwerten S0 - S3 für die vier Abtastperioden die Phasenverschiebung $\varphi$ des durch die Abtastungen erhaltenen Signalverlaufs zum sinusförmigen Signal für jeden Analog-Digital-Wandler ermittelt.

Damit wird für die Analog-Digital-Wandler in identischer Weise anhand der ermittelten Phasenverschiebung $\varphi$ eine automatische Phasenkorrektur von bei Abtastungen erhaltenen Signalen durchgeführt, wobei die Analog-Digital-Wandler allein durch die automatischen Phasenkorrekturen synchronisiert sind.

Somit entfallen externe, zusätzliche Synchronisierungsmittel um die Signale an den Ausgängen der Analog-Digital-Wandler zeitsynchron auswerten zu können.

Die Erfindung wird im Folgenden anhand der Zeichnungen erläutert. Es zeigen:

Figur 1:    Erstes Ausführungsbeispiel des erfindungsgemäßen Sicherheitssystems.

Figur 2:    Zeitlicher Verlauf eines Teilausschnitts eines sinusförmigen Signals eines Transponders des Sicherheitssystems gemäß Figur 1 mit einer Folge von Abtastpunkten.

Figur 3:    Zeitliche Verläufe

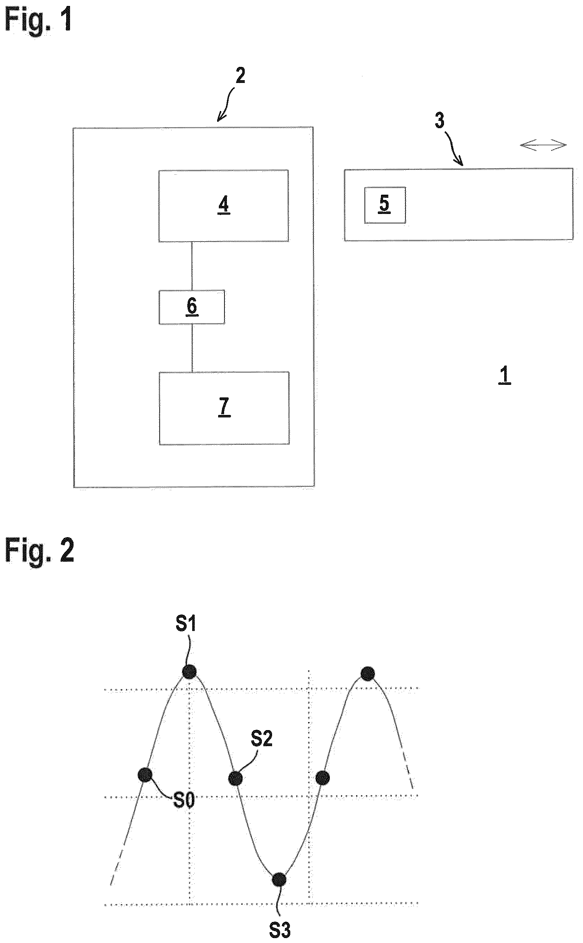

a) des sinusförmigen Signals eines Transponders des Sicherheitssystems gemäß Figur 1 mit einer Folge von Abtastpunkten des Analog-Digital-Wandlers des Sicherheitssystems,

b) von Signalcharakteristiken des abgetasteten sinusförmigen Signals,

c) der Phasenverschiebung des durch die Abtastungen erhaltenen Signals.

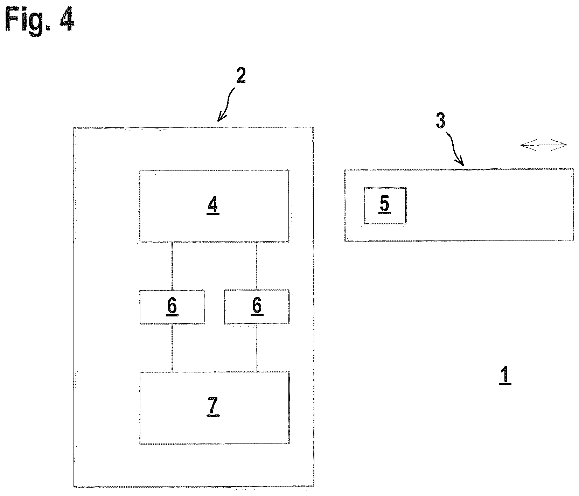

Figur 4:    Zweites Ausführungsbeispiel des erfindungsgemäßen Sicherheitssystems.

Figur 1 zeigt eine Ausführungsform des erfindungsgemäßen Sicherheitssystems 1, das einen Sicherheitsschalter 2 und einen relativ zum Sicherheitsschalter 2 beweglichen Betätiger 3 aufweist. Generell können auch mehrere Betätiger 3 vorgesehen sein.

Mit diesem Sicherheitssystem 1 erfolgt beispielsweise die Sicherung einer Schutztür als Zugang zu einem Gefahrenbereich. Der Betätiger 3 kann dann an der Schutztür angeordnet sein, der Sicherheitsschalter 2 kann an einem die Türöffnung begrenzenden Rahmen angeordnet werden. Im Gefahrenbereich befindet sich eine Anlage, von der Gefahren für Personen ausgehen können.

Mit dem Sicherheitssystem 1 wird die Schließstellung der Schutztür kontrolliert, wobei sich die Schutztür dann in ihrer Schließstellung befindet, wenn der Betätiger 3 in einer entsprechenden Schließstellung am Sicherheitsschalter 2 liegt.

Die Kontrolle der Schließstellung erfolgt mittels eines RFID-Systems. Dieses umfasst eine im Sicherheitsschalter 2 angeordnete RFID-Leseeinheit 4 und einen im Betätiger 3 angeordneten Transponder 5.

In der Schließstellung des Betätigers 3 befindet sich der Transponder 5 im Lesebereich der RFID-Leseeinheit 4. Auf ein Anforderungssignal der RFID-Leseeinheit 4 übersendet der Transponder 5 ein Signal, das vorzugsweise einen Code enthält, an die RFID-Leseeinheit 4. Das von der RFID-Leseeinheit 4 gelesene Signal des Transponders 5 wird über einen Analog-Digital-Wandler 6 einer Rechnereinheit 7 zugeführt, die zum Beispiel von einem Mikrocontroller oder einem ASIC gebildet sein kann. Der Analog-Digital-Wandler 6 kann in der Rechnereinheit 7 integriert sein.

Wird das Signal des Transponders 5, insbesondere der Code in der Rechnereinheit 7 erkannt, ist die Schließstellung der Schutztür erkannt und der Sicherheitsschalter 2 gibt über Schaltausgänge ein Schaltsignal aus, mit dem der Betrieb der Anlage freigegeben wird. Wird die Schließstellung nicht erkannt, wird der Betrieb der Anlage nicht freigegeben.

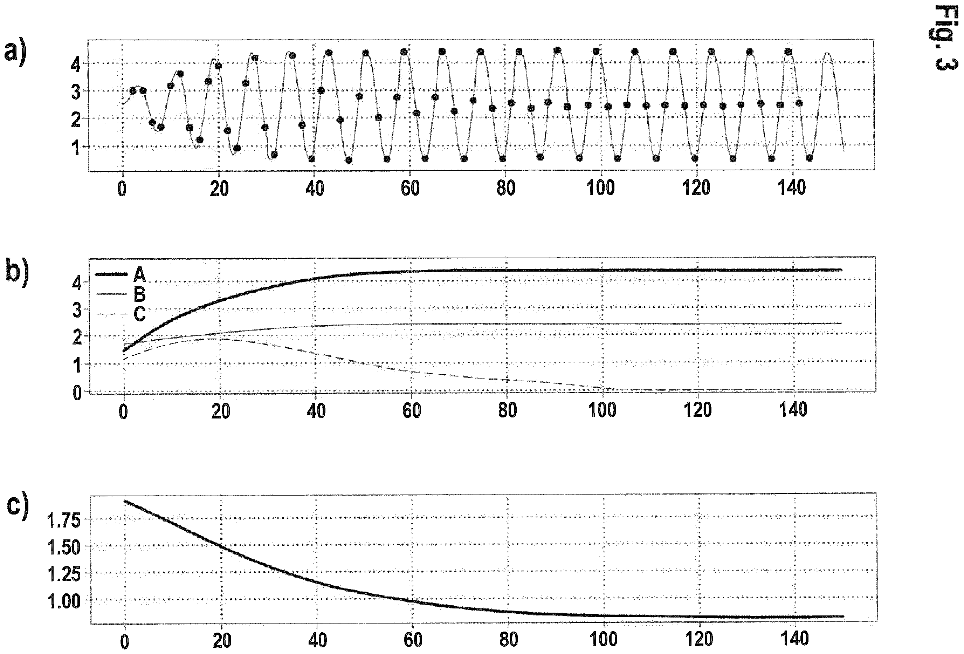

Das vom Transponder 5 ausgegebene Signal ist ein sinusförmiges Signal, wie Figur 2 in einem kleinen Ausschnitt und Figur 3a für einen längeren Zeitabschnitt zeigt.

Die Periode des sinusförmigen Signals ist als Parameter in Steuermitteln der Rechnereinheit 7 hinterlegt, das heißt abgespeichert.

Abhängig hiervon steuern die Steuermittel den Analog-Digital-Wandler 6 derart an, dass für diesen innerhalb einer Periode des sinusförmigen Signals vier äquidistante, jeweils von einer Viertelperiode versetzte Abtastzeitpunkte vorgegeben werden, wobei zu jedem Abtastzeitpunkt ein Abtastwert S0, S1, S2, S3 erhalten wird (Figur 2).

Erfindungsgemäß wird aus diesen Abtastwerten S0 - S3 in der Rechnereinheit 7 die Phasenverschiebung $\varphi$ des durch diese Abtastung gewonnenen Signals zum sinusförmigen Signal ermittelt.

Dabei wird aus der zeitlichen Folge der Abtastwerte S0 - S3 die Phasenverschiebung $\varphi$ gemäß der Berechnung $\varphi$ = arctan ((S3 - S1)/(S0 - S2)) berechnet.

Zudem werden aus der zeitlichen Folge der Abtastwerte S0 - S3 als weitere Signalcharakteristiken eine Signalstärke A = $S1 - S3$, eine Signalasymmetrie C = $S0 - S2$ und ein Signaloffset B = ($S0 + S1 + S2 + S3$)/4 bestimmt.

Anhand der ermittelten Phasenverschiebung $\varphi$ wird eine automatische Phasenkorrektur von bei Abtastungen erhaltenen Signalen durchgeführt.

Diese Phasenkorrektur erfolgt in einem iterativen Prozess derart, dass die bei einer Abtastperiode ermittelte Phasenverschiebung $\varphi$ als Ausgangspunkt für die Wahl der Abtastzeitpunkte für die nächste Abtastperiode verwendet wird, dass mit der bei einer Abtastperiode ermittelten Phasenverschiebung $\varphi$ die Phase der Abtastungen an die Phase des sinusförmigen Signals angepasst wird, und dass Sollwerte für die Iteration die Phasenverschiebung $\varphi$ = 0 oder die Signalasymmetrie $C$ = 0 vorgegeben wird.

Dies ist in den Figuren 3a, 3b, 3c veranschaulicht, wo die Verläufe des sinusförmigen Signals mit den Abtastzeitpunkten (Figur 3a), der ermittelten Signalcharakteristiken (Figur 3b) und der ermittelten Phasenverschiebung $\varphi$ (Figur 3c) abhängig von der Zeit in relativen Einheiten von 0 bis 140 aufgetragen sind.

Wie Figur 3a zeigt, steigt die Amplitude des sinusförmigen Signals im Zeitintervall $0 < t < 20$ noch stetig an, da sich der Transponder 5 noch nicht im optimalen Leseabstand zur RFID-Leseeinheit 4 befindet. Danach ($t > 30$) befindet sich der Transponder 5 im optimalen Leseabstand und die Maximal-Amplitude des sinusförmigen Signals bleibt konstant.

Bei der ersten Abtastperiode des Analog-Digital-Wandlers 6, bei welcher zum ersten Mal vier Abtastwerte S0 - S3 bei der Abtastung des sinusförmigen Signals erhalten wird, wird eine noch große Phasenverschiebung $\varphi$ (größer als 1,75) erhalten, wie Figur 3c zeigt.

Bei den folgenden Abtastungen wird zur Definition der Lage der Abtastzeitpunkt jeweils die in der vorigen Abtastung ermittelte Phasenverschiebung $\varphi$ berücksichtigt. Durch diesen iterativen Prozess verkleinert sich die Phasenverschiebung $\varphi$ kontinuierlich (Figur 3c). Wie Figur 3b insbesondere zeigt, konvergiert die Phasenverschiebung $\varphi$ wie auch die Signalasymmetrie C bereits nach wenigen Abtastperioden (im Zeitraum $80 < t < 120$) gegen Null, das heißt die Abtastungen erfolgen dann exakt in Phase mit dem sinusförmigen Signal, so dass immer ein Abtastzeitpunkt pro Periode auf den Zeitpunkt fällt, zu welchem das sinusförmige Signal seinen Maximalwert annimmt (wie aus Figur 3a ersichtlich). Auch die Signalstärke A und der Signaloffset B konvergieren gegen Grenzwerte. Dadurch wird eine sichere fehlerfreie Detektion des sinusförmigen Signals ermöglicht.

Figur 4 zeigt ein zweites Ausführungsbeispiel des Sicherheitssystems 1. Das Sicherheitssystem 1 unterscheidet sich von der Ausführungsform gemäß Figur 1 nur dadurch, dass die in der RFID-Leseeinheit 4 gelesenen sinusförmigen Signale der Transponder 5 zweikanalig in die Rechnereinheit 7 eingelesen werden, wobei jeder Kanal einen Analog-Digital-Wandler 6 aufweist. Die Analog-Digital-Wandler 6 sind identisch ausgebildet.

Beide Analog-Digital-Wandler 6 werden von den Steuermitteln in identischer Weise gesteuert. Für jeden Analog-Digital-Wandler 6 des Sicherheitssystems 1 erfolgt die Abtastung des sinusförmigen Signals des Transponders 5, die Bestimmung der Phasenverschiebung $\varphi$ sowie die automatische Phasenkorrektur identisch zum Ausführungsbeispiel gemäß Figur 1.

Sobald die Abtastungen gegen den Sollwert $\varphi$ = 0 konvergieren, erfolgen diese Abtastungen wieder phasensynchron zum sinusförmigen Signal. Dies aber bedeutet, dass die Ausgangssignale der Analog-Digital-Wandler 6 selbst völlig synchron zueinander sind, so dass keine weiteren Synchronisierungsmittel mehr erforderlich sind, um diese untereinander zu synchronisieren, damit diese gemeinsam in der Rechnereinheit 7 ausgewertet werden können.

Bezugszeichenliste

(1)     Sicherheitssystem
(2)     Sicherheitsschalter
(3)     Betätiger
(4)     RFID-Leseeinheit
(5)     Transponder
(6)     Analog-Digital-Wandler
(7)     Rechnereinheit

S0 - S3     Abtastwert
A - C     Signalcharakteristik

**Patentansprüche**

1. Sicherheitssystem (1) mit wenigstens einem Transponder (5) und wenigstens einer RFID-Leseeinheit (4), wobei mit der RFID-Leseeinheit (4) ein sinusförmiges Signal aus dem Transponder (5) auslesbar und über einen Analog-Digital-Wandler (6) einer Rechnereinheit (7) zuführbar ist, **dadurch gekennzeichnet, dass** Steuermittel vorgesehen sind, in welchen die Periode des sinusförmigen Signals vorgegeben ist, dass durch die Steuermittel für eine Abtastung des sinusförmigen Signals während einer Abtastperiode vier Abtastzeitpunkte vorgegeben werden, die jeweils um ein Viertel der Periode des sinusförmigen Signals zueinander äquidistant versetzt sind, dass mit dem Analog-Digital-Wandler (6) für jeden Abtastzeitpunkt ein Abtastwert S0, S1, S2 bzw. S3 erhalten wird, und dass in den Steuermitteln aus den Abtastwerten S0, S1, S2 und S3 für die vier Abtastzeitpunkte die Phasenverschiebung $\varphi$ des durch die Abtastungen erhaltenen Signalverlaufs zum sinusförmigen Signal ermittelt wird.

2. Sicherheitssystem (1) nach Anspruch 1, **dadurch gekennzeichnet, dass** aus der zeitlichen Folge der Abtastwerte S0, S1, S2 und S3 die Phasenverschiebung $\varphi$ gemäß der Berechnung

$$\varphi = \arctan\left((S3 - S1)/(S0 - S2)\right)$$

berechnet wird.

3. Sicherheitssystem (1) nach Anspruch 2, **dadurch gekennzeichnet, dass** aus

der zeitlichen Folge der Abtastwerte S0, S1, S2 und S3 als weitere Signalcharakteristiken
eine Signalstärke A = $S1$ - $S3$
eine Signalasymmetrie C = $S0$ - $S2$
und ein Signaloffset B = ($S0$ + $S1$ + $S2$ + $S3$)/4
bestimmt werden.

4. Sicherheitssystem (1) nach einem der Ansprüche 1 bis 3, **dadurch gekennzeichnet, dass** anhand der ermittelten Phasenverschiebung $\varphi$ eine automatische Phasenkorrektur von bei Abtastungen erhaltenen Signalen durchgeführt wird.

5. Sicherheitssystem (1) nach einem der Ansprüche 1 bis 4, **dadurch gekennzeichnet, dass** die bei einer Abtastperiode ermittelte Phasenverschiebung $\varphi$ als Ausgangspunkt für die Wahl der Abtastzeitpunkte für die nächste Abtastperiode verwendet wird.

6. Sicherheitssystem (1) nach Anspruch 5, **dadurch gekennzeichnet, dass** mit der bei einer Abtastperiode ermittelten Phasenverschiebung $\varphi$ die Phase der Abtastungen an die Phase des sinusförmigen Signals angepasst wird.

7. Sicherheitssystem (1) nach einem der Ansprüche 5 oder 6, **dadurch gekennzeichnet, dass** die Wahl der Abtastzeitpunkte abhängig von der zuvor ermittelten Phasenverschiebung $\varphi$ einen iterativen Prozess bildet.

8. Sicherheitssystem (1) nach Anspruch 7, **dadurch gekennzeichnet, dass** als Sollwerte für die Iteration

die Phasenverschiebung $\varphi$ = 0 oder die Signalasymmetrie C = 0 vorgegeben sind.

9. Sicherheitssystem (1) nach einem der Ansprüche 1 bis 8, **dadurch gekennzeichnet, dass** die Steuermittel Bestandteil der Rechnereinheit (7) sind.

10. Sicherheitssystem (1) nach einem der Ansprüche 1 bis 9, **dadurch gekennzeichnet, dass** die sinusförmige Signale des Transponders (5) der Rechnereinheit (7) mehrkanalig zugeführt sind, wobei jeder Kanal einen Analog-Digital-Wandler (6) aufweist, wobei für jeden Analog-Digital-Wandler (6) in identischer Weise Abtastungen durchgeführt werden und wobei für jeden Analog-Digital-Wandler (6) die Phasenverschiebung $\varphi$ des durch die Abtastungen erhaltenen Signalverlaufs zum sinusförmigen Signal ermittelt wird.

11. Sicherheitssystem (1) nach Anspruch 10, **dadurch gekennzeichnet, dass** für die Analog-Digital-Wandler (6) in identischer Weise anhand der ermittelten Phasenverschiebung $\varphi$ eine automatische Phasenkorrektur von bei Abtastungen erhaltenen Signalen durchgeführt wird, wobei die Analog-Digital-Wandler (6) allein durch die automatischen Phasenkorrekturen synchronisiert sind.

12. Sicherheitssystem (1) nach einem der Ansprüche 1 bis 11, **dadurch gekennzeichnet, dass** dieses einen Sicherheitsschalter (2) aufweist, in welchen die RFID-Leseeinheit (4) integriert ist.

13. Sicherheitssystem (1) nach einem der Ansprüche 1 bis 12, **dadurch gekennzeichnet, dass** dieses ein Zuhaltesystem oder ein Zugangskontrollsystem ist.

14. Sicherheitssystem (1) nach einem der Ansprüche 12 oder 13, **dadurch gekennzeichnet, dass** dieses wenigstens einen Betätiger (3) mit einem Transponder (5) aufweist.

15. Verfahren zum Betrieb eines Sicherheitssystem (1) mit wenigstens einem Transponder (5) und wenigstens einer RFID-Leseeinheit (4), wobei mit der RFID-Leseeinheit (4) ein sinusförmiges Signal aus dem Transponder (5) auslesbar und über einen Analog-Digital-Wandler (6) einer Rechnereinheit (7) zuführbar ist, **dadurch gekennzeichnet, dass** Steuermittel vorgesehen sind, in welchen die Periode des sinusförmigen Signals vorgegeben ist, dass durch die Steuermittel für eine Abtastung des sinusförmigen Signals während einer Abtastperiode vier Abtastzeitpunkte vorgegeben werden, die jeweils um ein Viertel der Periode des sinusförmigen Signals zueinander äquidistant versetzt sind, dass mit dem Analog-Digital-Wandler (6) für jeden Abtastzeitpunkt ein Abtastwert S0, S1, S2 bzw. S3 erhalten wird, und dass in den Steuermitteln aus den Abtastwerten S0, S1, S2 und S3 für die vier Abtastzeitpunkte die Phasenverschiebung <p des durch die Abtastungen erhaltenen Signalverlaufs zum sinusförmigen Signal ermittelt wird.

## Claims

1. A safety system (1) having at least one transponder (5) and at least one RFID reading unit (4), wherein a sinusoidal signal can be read from the transponder (5) by means of the RFID reading unit (4) and can be fed to a computer unit (7) via an analogue-to-digital converter (6), **characterised in that** control means are provided in which the period of the sinusoidal signal is predetermined, **in that** the control means for sampling the sinusoidal signal during a sampling period predetermine four sampling instants which are each equidistant from one another by a quarter of the period of the sinusoidal signal, **in that** the analogue-to-digital converter (6) is used to obtain a sampling value SO, S1, S2 and S3 for each sampling instant, and **in that** the control means for sampling the sinusoidal signal during a sampling period predetermine four sampling instants which are each equidistant from one another by a quarter of the period of the sinusoidal signal. S3 is obtained for each sampling time point, and that the phase shift φ of the signal curve obtained by the samplings with respect to the sinusoidal signal is determined in the control means from the sampling values S0, S1, S2 and S3 for the four sampling time points.

2. A safety system (1) according to claim 1, **characterised in that** the phase shift φ is determined from the time sequence of the sampled values S0, S1, S2 and S3 in accordance with the calculation

$$\varphi = \arctan((S3 - S1)/(S0 - S2))$$

is calculated.

3. A safety system (1) according to claim 2, **characterised in that** from the time sequence of the sampled values S0, S1, S2 and S3 as further signal characteristics, the following elements can be determined:

   a signal strength A = $S1 - S3$
   a signal asymmetry C = $S0 - S2$
   and a signal offset B = ($S0 + S1 + S2 + S3$)/4.

4. A safety system (1) according to one of claims 1 to 3, **characterised in that** an automatic phase correction of signals obtained during sampling is carried out on the basis of the determined phase shift φ.

5. A safety system (1) according to one of claims 1 to 4, **characterised in that** the phase shift φ determined during a sampling period is used as the starting point for selecting the sampling times for the next sampling period.

6. A safety system (1) according to claim 5, **characterised in that** the phase shift φ determined during a sampling period is used to adapt the phase of the samples to the phase of the sinusoidal signal.

7. A safety system (1) according to one of claims 5 or 6, **characterised in that** the selection of the sampling times forms an iterative process depending on the previously determined phase shift φ.

8. A safety system (1) according to claim 7, **characterised in that** the phase shift φ = 0 or the signal asymmetry C = 0 are specified as setpoint values for the iteration.

9. A safety system (1) according to one of claims 1 to 8, **characterised in that** the control means are part of the computer unit (7).

10. A safety system (1) according to one of claims 1 to 9, **characterised in that** the sinusoidal signals of the transponder (5) are fed to the computer unit (7) in multiple channels, wherein each channel has an analogue-to-digital converter (6), wherein samples are carried out in an identical manner for each analogue-to-digital converter (6) and wherein the phase shift φ of the signal curve obtained by the samples to the sinusoidal signal is determined for each analogue-to-digital converter (6).

11. A safety system (1) according to claim 10, **characterised in that** an automatic phase correction of signals obtained during sampling is carried out for the analogue-to-digital converters (6) in an identical manner on the basis of the determined phase shift φ, the analogue-to-digital converters (6) being synchronised solely by the automatic phase corrections.

12. A safety system (1) according to one of claims 1 to 11, **characterised in that** it has a safety switch (2) in which the RFID reading unit (4) is integrated.

13. A safety system (1) according to one of claims 1 to 12, **characterised in that** this is a locking system or an access control system.

14. A safety system (1) according to one of claims 12 or 13, **characterised in that** it has at least one actuator (3) with a transponder (5).

15. A method for operating a safety system (1) with at least one transponder (5) and at least one RFID reading unit (4), wherein a sinusoidal signal can be read from the transponder (5) with the RFID reading unit (4) and can be fed to a computing unit (7) via an analogue-to-digital converter (6), **characterised in that** control means are provided, in which the period of the sinusoidal signal is predetermined, **in that** the control means for sampling the sinusoidal signal during a sampling period predetermine four sampling instants which are each equidistantly offset from one another by a quarter of the period of the sinusoidal signal, **in that** a sample value S0, S1, S2 or S3 is obtained with the analogue-to-digital converter (6) for each sampling instant, and **in that** the control means for sampling the sinusoidal signal during a sampling period predetermine four sampling instants which are each equidistantly offset from one another by a quarter of the period of the sinusoidal signal. S3 is obtained by the analogue-to-digital converter (6) for each sampling instant, and **in that** the phase shift φ of the signal curve obtained by the samples is determined in the control means from the samples S0, S1, S2 and S3 for the four sampling instants with respect to the sinusoidal signal.

**Revendications**

1. Système de sécurité (1) comportant au moins un transpondeur (5) et au moins une unité de lecture RFID (4), dans lequel un signal sinusoïdal peut être lu sur le transpondeur (5) au moyen de l'unité de lecture RFID (4) et peut être transmis à une unité informatique (7) par l'intermédiaire d'un convertisseur analogique-numérique (6), **caractérisé en ce que** des moyens de commande sont prévus dans lesquels la période du signal sinusoïdal est prédéterminée, **en ce que** les moyens de commande pour l'échantillonnage du signal sinusoïdal pendant une période d'échantillonnage prédéterminent quatre instants d'échantillonnage qui sont chacun équidistants les uns des autres d'un quart de la période du signal sinusoïdal, **en ce que** le convertisseur analogique-numérique (6) est utilisé pour obtenir une valeur d'échantillonnage SO, S1, S2 et S3 pour chaque instant d'échantillonnage, et **en ce que** les moyens de commande pour l'échantillonnage du signal sinusoïdal pendant une période d'échantillonnage prédéterminent quatre instants d'échantillonnage qui sont chacun équidistants les uns des autres d'un quart de la période du signal sinusoïdal. S3 est obtenu pour chaque instant d'échantillonnage, et que le déphasage φ de la courbe du signal obtenu par les échantillonnages par rapport au signal sinusoïdal est déterminé dans les moyens de commande à partir des valeurs d'échantillonnage S0, S1, S2 et S3 pour les quatre instants d'échantillonnage.

2. Système de sécurité (1) selon la revendication 1, **caractérisé en ce que** le déphasage φ est déterminé à partir de la séquence temporelle des valeurs échantillonnées S0, S1, S2 et S3 selon le calcul.

$$\varphi = \arctan((S3 - S1)/(S0 - S2)).$$

3. Système de sécurité (1) selon la revendication 2, **caractérisé en ce qu'**à partir de la séquence temporelle des valeurs échantillonnées S0, S1, S2 et S3 en tant que caractéristiques supplémentaires du signal, les éléments suivants peuvent être déterminés :

   l'intensité du signal A = $S1 - S3$
   une asymétrie du signal C = $S0 - S2$
   et un décalage du signal B = $(S0 + S1 + S2 + S3)/4$.

4. Système de sécurité (1) selon l'une des revendications 1 à 3, **caractérisé en ce qu'**une correction automatique de la phase des signaux obtenus lors de l'échantillonnage est effectuée sur la base du déphasage φ déterminé.

5. Système de sécurité (1) selon l'une des revendications 1 à 4, **caractérisé en ce que** le déphasage φ déterminé au cours d'une période d'échantillonnage est utilisé comme point de départ pour la sélection des temps d'échantillonnage de la période d'échantillonnage suivante.

6. Système de sécurité (1) selon la revendication 5, **caractérisé en ce que** le déphasage φ déterminé pendant une période d'échantillonnage est utilisé pour adapter la phase des échantillons à la phase du signal sinusoïdal.

7. Système de sécurité (1) selon l'une des revendications 5 ou 6, **caractérisé en ce que** la sélection des temps d'échantillonnage forme un processus itératif dépendant du déphasage φ déterminé précédemment.

8. Système de sécurité (1) selon la revendication 7, **caractérisé en ce que** le déphasage φ = 0 ou l'asymétrie du signal C = 0 sont spécifiés comme valeurs de consigne pour l'itération.

9. Système de sécurité (1) selon l'une des revendications 1 à 8, **caractérisé en ce que** les moyens de commande font partie de l'unité informatique (7).

10. Système de sécurité (1) selon l'une des revendications 1 à 9, **caractérisé en ce que** les signaux sinusoïdaux du transpondeur (5) sont transmis à l'unité informatique (7) en plusieurs canaux, chaque canal étant doté d'un convertisseur analogique-numérique (6), les échantillons étant effectués de manière identique pour chaque convertisseur analogique-numérique (6) et le déphasage φ de la courbe du signal obtenu par les échantillons par rapport au signal sinusoïdal étant déterminé pour chaque convertisseur analogique-numérique (6).

11. Système de sécurité (1) selon la revendication 10, **caractérisé en ce qu'**une correction de phase automatique des signaux obtenus lors de l'échantillonnage est effectuée pour les convertisseurs analogique-numérique (6) de manière identique sur la base du déphasage φ déterminé, les convertisseurs analogique-numérique (6) étant synchronisés uniquement par les corrections de phase automatiques.

12. Système de sécurité (1) selon l'une des revendications 1 à 11, **caractérisé en ce qu'**il comporte un interrupteur de sécurité (2) dans lequel est intégrée l'unité de lecture RFID (4).

13. Système de sécurité (1) selon l'une des revendications 1 à 12, **caractérisé en ce qu'**il s'agit d'un système de verrouillage ou d'un système de contrôle d'accès.

14. Système de sécurité (1) selon l'une des revendications 12 ou 13, **caractérisé en ce qu'**il comporte au moins un actionneur (3) avec un transpondeur (5).

15. Procédé de fonctionnement d'un système de sécurité (1) avec au moins un transpondeur (5) et au moins une unité de lecture RFID (4), dans lequel un signal sinusoïdal peut être lu sur le transpondeur (5) avec l'unité de lecture RFID (4) et peut être transmis à une unité de calcul (7) via un convertisseur analogique-numérique (6), **caractérisé en ce que** des moyens de commande sont prévus, dans lesquels la période du signal sinusoïdal est prédéterminée, **en ce que** les moyens de commande pour l'échantillonnage du signal sinusoïdal pendant une période d'échantillonnage prédéterminent quatre instants d'échantillonnage qui sont chacun décalés de manière équidistante d'un quart de la période du signal sinusoïdal, **en ce qu'**une valeur d'échantillonnage S0, S1, S2 ou S3 est obtenue avec le convertisseur analogique-numérique (6) pour chaque instant d'échantillonnage, et **en ce que** les moyens de commande pour l'échantillonnage du signal sinusoïdal pendant une période d'échantillonnage prédéterminent quatre instants d'échantillonnage qui sont chacun décalés de manière équidistante d'un quart de la période du signal sinusoïdal. S3 est obtenu par le convertisseur analogique-numérique (6) pour chaque instant d'échantillonnage, et **en ce que** le déphasage φ de la courbe du signal obtenu par les échantillons est déterminé dans les moyens de commande à partir des échantillons S0, S1, S2 et S3 pour les quatre instants d'échantillonnage par rapport au signal sinusoïdal.

# Fig. 1

# Fig. 2

# Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009090426 A2
- US 2019003675 A1